# EUROPEAN PATENT SPECIFICATION

(11) **EP 1 807 323 B1**
(45) Date of publication and mention of the grant of the patent: **02.07.2008**
(21) Application number: 05790940.0
(22) Date of filing: 24.08.2005
(51) Int. Cl.: B65D 83/54

(54) **VALVE STEM FOR A METERED DOSE DISPENSING VALVE**
VENTILSCHAFT FÜR EIN DOSIERVENTIL
TIGE DE SOUPAPE POUR VALVE DOSEUSE

(30) Priority: 16.09.2004 GB 0420529
(43) Date of publication of application: 18.07.2007
(73) Proprietor: 3M Innovative Properties Company, Saint Paul, MN 55133-3427 (US)
(72) Inventor: HODSON, Peter D.,, Bracknell, Berkshire RG12 8HT (GB); PURKINS, Graham R.,, Bracknell, Berkshire RG12 8HT (GB)
(74) Representative: Aleandri-Hachgenei, Lorraine E.
(86) International application number: PCT/US2005/030055
(87) International publication number: WO 2006/033757

(56) References cited:
- US-A- 5 772 085

## Description

### Field

The present invention relates to valve stems for use in metered dose dispensing valves for dispensing metered volumes of a pressurized aerosol formulation, in particular a medicinal aerosol formulation, from an aerosol container.

### Background

Metering valves are particularly useful for administering medicinal formulations that include a liquefied gas propellant and are delivered to a patient in an aerosol for inhalation, nasal, or sublingual administration.

Medicinal aerosol formulations generally comprise medicament, one or more propellants (e.g. chlorofluorocarbons and more recently hydrogen-containing fluorocarbons, such as 1,1,1,2-tetrafluoroethane (HFA 134a) and 1,1,1,2,3,3,3-heptafluoropropane (HFA 227)), and possibly excipients, such as surfactant and/or a solvent, such as ethanol.

When administering medicinal formulations, a dose of formulation sufficient to produce the desired physiological response is delivered to the patient. The proper predetermined amount of the formulation must be dispensed to the patient in each successive dose. Thus, any dispensing system must be able to dispense doses of the medicinal formulation accurately and reliably over the shelf life of the medicinal product to help assure the safety and efficacy of the treatment.

Metering dose valves typically comprise a valve stem movable between closed and dispensing positions.

The metering valves typically used in commercially available aerosol inhalers comprise a fixed metering chamber and a valve stem that slides through a diaphragm, also known as an outer stem gasket or seal, mounted in a fixed manner on the valve body of the valve.

However, in some other metering valves, the valve stem may comprise an annular seal capable of forming a fluid-tight seal with a portion of the wall of the chamber or valve body. In particular, one or more annular seals may be arranged on the valve stem. Examples of such metering valves include various embodiments of shuttle-type metered dose dispensing valves disclosed in US 5,772,085. Other examples of such metering valves include metered dose dispensing valves disclosed in WO 04/022143.

### Summary

Pressurized metered dose inhaler (pMDI) valves represent a unique challenging application of metering valve technology due to many exacting requirements. In particular, such valves need to be capable of adequately sealing medicament formulations based on pressurised propellant systems, minimizing transmission of propellant or other components out of the system, and at the same time minimizing ingress of moisture and air into the system. Ideally they are simple, reliable, small, and cheap, and operate at suitably low actuation forces. And, of course, desirably they should adequately sample, and accurately meter, the medicament formulation.

Surprisingly, it has been found that for pMDI valves including a valve stem having a seal for forming a fluid-tight, typically annular, seal with a portion of an internal wall of the valve, such as those described in US 5,772,085 and WO 04/022143, the incorporation of one or more (as dependent on the particular valve design) seals in the form of a disk seal allows for a number of desirable and advantageous effects.

Accordingly, the present invention provides in one aspect a valve stem for use with a metered dose dispensing valve, said valve stem generally defining a central longitudinal axis and comprising a first stem portion, a second stem portion and a disk seal, said disk seal being disposed between the first and second stem portions along the longitudinal axis and said disk seal extending radially outwardly from the longitudinal axis of the valve stem so as to be capable of forming a fluid-tight seal with a portion of an internal wall of said valve.

For metered dose valves including valve stems with two seals, the valve stem may then desirably include a third stem portion and a second disk seal, wherein the second disk seal is disposed between the second and third stem portions along the longitudinal axis of the valve stem. The second disk seal like the first disk seal is desirably configured to extend radially outwardly from the valve stem so as to be capable of forming a fluid-tight seal with a portion of an internal wall of the valve. In a similar manner, valve stems may be provided having three or more seals by incorporating the appropriate number of additional stem portions and disk seals disposed there between as desired or needed. Suitably the disk seal is elastomeric, more particularly made of a material comprising a thermoset elastomer or a thermoplastic elastomer.

A disk seal being substantially free of openings or perforations significantly reduces axial ingress of moisture into the system along the stem as well as axial egress of formulation constituents by the reverse route.

With valve stems incorporating a disk seal in accordance with the invention, the risk and vulnerability of splitting that is associated with thin annular seals can be avoided, for example when the valve stem diameter needs to be (e.g. due to the particular valve design) or is desirably (e.g. for overall strength of the valve stem) close to the internal diameter of said portion of the internal wall of the valve. Also the provision of a valve stem incorporating a disk seal is advantageous in that a number of issues relating to manufacturing tolerances can be avoided, which in turn allows for more reliable and cost-effective manufacture of the valve stems and the valves incorporating such valve stems.

Furthermore through the application of a disk seal, the tendency of the seal to flap or flex and/or axially translate as a consequence of stem reciprocation during use in the metering valve may desirably be reduced, thereby facilitating uniform dosing of medicament. The tendency of the seal to flap, flex and/or axially translate may be desirably even further minimized, if not eliminated, by affixing the disk seal to at least one stem portion, or more desirably to both stem portions. The disk seal may be affixed to one or both neighboring stem portions by mechanically fixing and/or bonding. Bonding of a disk seal to one or both stem neighboring portions may be achieved by molding (e.g. through various molding techniques, such as multi-component injection molding, insert molding, over or under molding), welding (e.g ultrasonic welding), adhesive bonding or solvent bonding.

Advantageously, the disk seal fixedly adjoins the two neighboring stem portions to one another. More particularly the two stem portions are not directly affixed or connected to each other. Such valve stem embodiments provide enhanced axial tolerance to dimensional variations within the metering valve, and thus reduce the risk of a seal wedging solid in between the valve stem and a portion of an internal wall of the valve, e.g. as a result of potentially unfavorable component dimensions and/or under certain loading conditions. Also advantageously, the disk seal of such embodiments can be easily and conveniently loaded with a controlled force within a valve (e.g. through the use of valve spring and/or formulation pressure), and thus allowing more control of seal compression and friction between the seal and the portion of the internal wall of the valve to which the seal will engage to form a fluid-tight seal for enhanced valve performance (e.g. allowing low actuation forces as well as potentially enhanced uniformity of dosing).

Due to their desirable structural qualities, valve stems in accordance with the invention are particular suitable for use in metered dose dispensing valves and metered dose dispensers, e.g. metered dose inhalers, for the delivery of medicament, e.g. medicinal aerosol formulations, in particular medicinal aerosol formulations comprising medicament and liquefied propellant HFA 134a and/or HFA 227, more particular such formulations further comprising ethanol.

The dependent claims define further embodiments of the invention.

The invention, its embodiments and further advantages will be described in the following with reference to the following drawings.

### Brief Description of the Drawings

Figures 1a and 1b represent vertical cross-sectional views through an exemplary embodiment of a metered dose dispensing valve in accordance with the invention showing the valve in a) a priming position and b) a dispensing position.
Figures 2 to 4 represent vertical cross-sectional views through three further exemplary embodiments of valve stems in accordance with the present invention.
Figures 5a to 5c represent vertical cross-sectional views through an additional exemplary embodiment of a metered dose dispensing valve in accordance with the invention, showing the valve a) at resting position, b) during filling stage and c) the discharge stage.

### Detailed Description

For a better understanding of the present invention, an exemplary dispensing valve advantageously including a valve stem in accordance with the present invention, will be initially described.

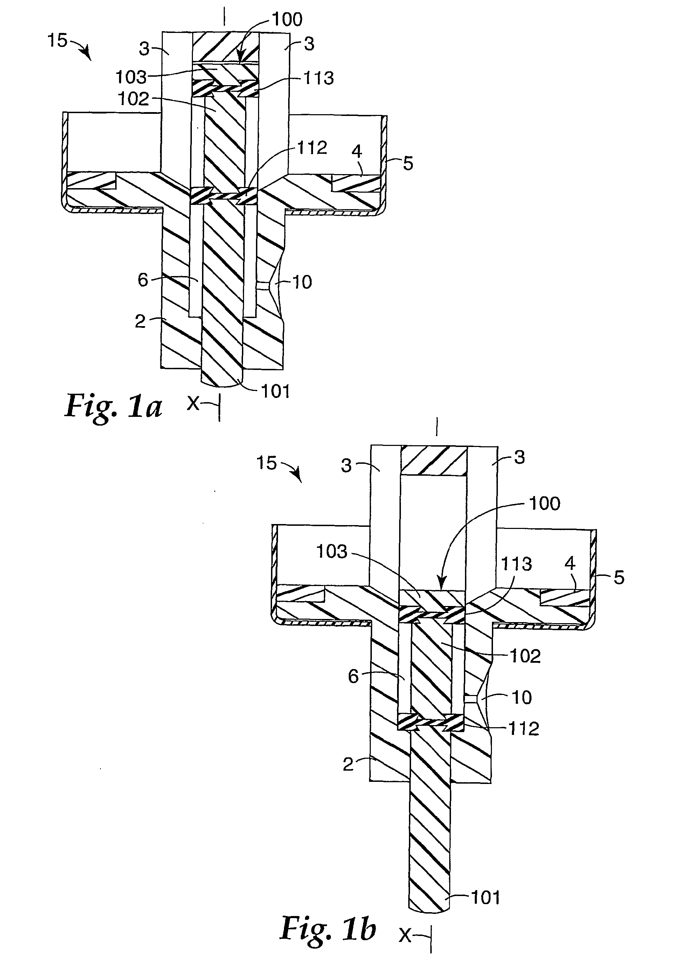

Figures 1a and b illustrate an exemplary shuttle-type metered dose dispensing valve, of the type disclosed in US 5,772,085. Referring to Figs. 1a and 1b, the valve (15) typically comprises a body (2) having an annular gasket seal (4) for engaging the neck of an aerosol container or vial (not shown) to facilitate a gas-tight seal. The body (2) may be secured to the aerosol container or vial by any suitable means e.g. a conventional outer casing or ferrule (5), which is crimped around the neck of the aerosol container. As can be best seen in Fig. 1b, the body (2) defines a chamber (6) having an outlet passage (10) for dispensing e.g. pressurized medicinal aerosol formulation. The valve stem (100) extends through the chamber (6) and is movable between a closed or priming position (as shown in Fig. 1a) and a dispensing position (as shown in Fig. 1b), The valve stem includes a first stem portion (101) and a second stem portion (102) with a first (outer) disk seal (112) disposed there between along a central longitudinal axis (X).

Further the valve stem includes a third stem portion (103) with a second (inner) disk seal (113) disposed between the second and third stem portions (102, 103). Both disk seals (112,113) extend radially outwardly from the central longitudinal axis (X) of the valve stem (100) and provide fluid-tight annular seals between the valve stem and the inner wall of the chamber (6). The chamber (6), external dimensions of the valve stem (100) and the positions of the seals (112 and 113) are arranged to define a pre-determined volume within the chamber (6) between the seals (112 and 113). This can be best understood by reference to Fig. 1b showing the valve in its dispensing position. As can be seen in Fig. 1a, in its closed or priming position the space between the seals (112 and 113) around the valve stem (100) extends into the reservoir containing aerosol formulation. As the valve stem (100) moves downwardly to its dispensing position, the seal (112) moves down the chamber allowing free access of the aerosol formulation into the chamber (6). Further movement of the valve stem causes seal (113) to enter the chamber (6) thereby trapping a metered volume of aerosol formulation between the seals (112 and 113) and the interior wall of the chamber (6). When the valve stem reaches its dispensing position the seal (112) passes outlet passage (10) thereby allowing direct communication between the metered volume and the outlet passage (10) thereby allowing the metered volume of formulation to be dispensed. In the illustrated valve, the valve is arranged such that the valve stem will be biased outwardly towards its dispensing position by vapor pressure generated by pressurized aerosol formulation contained within the container of the dispenser. The alignment of the valve stem may be ensured by ribs (3), which do not obstruct the free flow of aerosol formulation (as depicted by the arrow in Figure 1a) around the valve stem (100) between the seals (112 and 113).

As can be appreciated from the exemplary embodiment shown in Figure 1, through the application of one or more disk seals, which are substantially free of openings or perforations, axial ingress of moisture or air as well as axial egress of formulation components along the valve stem can be advantageously minimized, if not completely eliminated. In terms of transverse cross-sectional area of the disk seal, the total area of any openings or perforations, if present, should not exceed 2% of the total area of the disk seal (solid area plus open area) (which can be understood here to mean "substantially free of openings or perforations"), more desirably the total area of any openings or perforations, if present, should not exceed 1% of the total area of the disk seal (which can be understood to mean "essentially free of openings or perforations"). For enhanced blockage of any axial leakage along the valve stem, most desirably the disk seal is free of openings or perforations.

The disk seal is desirably affixed (e.g. suitably through mechanical fixing and/or bonding) to at least one of the adjacent stem portions, more desirably to both of the adjacent stem portions. Referring to the disk seals illustrated in Figure 1, these seals (112,113) may be suitably affixed to the respective stem portions (101, 102 and 103) by bonding. Bonding may be suitably achieved through molding techniques (e.g. through multi-component injection molding, insert molding, over or under molding, and for example using molding techniques as described in our co-pending application), WO 2005/010413, welding (e.g. ultrasonic welding), adhesive bonding or solvent bonding. The most suitable method of bonding in part depends on the particular materials selected for the respective parts.

Also as can be taken from the illustrated exemplary valve in Figure 1, it is preferable to fixedly adjoin the two neighboring stem portions (disposed on the two opposite transverse sides of the disk seal) through the interposed disk seal. More particularly it is desirable that the respective stem portions are not directed affixed to one another, nor directly connected to one another. This is advantageous (e.g. compared to annular seals mounted on affixed stem portions) in terms in manufacturing reliability and cost-effectiveness, because the need for rigid and strict control of inside seal diameter and outside stem diameter tolerances for optimal sealing can be eliminated. Furthermore as mentioned above, this also enhances axial tolerance to dimensional variations with the metering valves as well as allowing for the possibility of enhanced control of sealing and frictional forces for desirable actuation forces and/or uniformity of dosing (through lowering sealing variability). For example, referring to the valve illustrated in Figure 1, due to this ability to control the compression of the disk seal (112,113) against the internal wall of the chamber (6), undesirable seal dragging or flexing (which can thereby affect the metering volume) can be better controlled and minimized. Finally, this also advantageously allows for a greater freedom in optimal selection of material for the valve stem, more particularly for the respective stem portions, and its respective function in the valve stem and dispensing valve.

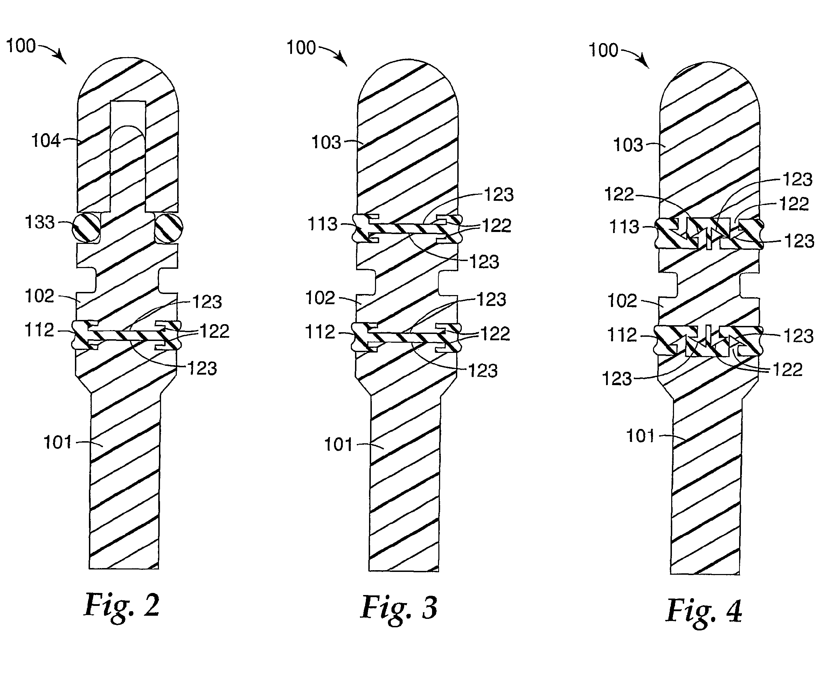

Figures 2 to 4 illustrate three additional exemplary embodiments of valve stems in accordance with the present invention, which may be advantageously used in shuttle-type metered dose dispensing valves of the type disclosed in US 5,772,085. Similar to the valve stem of the dispensing valve illustrated in Figure 1, the valve stems illustrated in Figures 2 to 4 each include two seals, an outer seal and an inner seal.

Figure 2 illustrates a vertical cross-sectional view of a valve stem (100) including a first stem portion (101) and a second stem portion (102) having a (first outer) disk seal (112) disposed there between. In this exemplary embodiment, a conventional o-ring type seal is used for as the inner seal (133), the seal being mounted onto the second stem portion (102) with a cap (104) clipped onto the second stem portion. As can be appreciated from this exemplary embodiment for a valve stem including two or more seals, it is may advantageous to use a disk seal for the outermost seal, said seal often (depending partly upon the stem's usual position within the valve during storage) being the most sensitive to leakage, ingress and egress problems and to simply apply a conventional o-ring type seal for inner or innermost seals.

However, as shown for e.g. in Figure 1 as well as Figure 3 illustrating a further exemplary valve stem embodiment, it is more desirable that both the outer and inner seal are provided in the form of a disk seal. Similar to the exemplary valve stem illustrated in Figure 1, the exemplary valve stem illustrated in Figure 3 includes a third stem portion (103) with a disk seal (113) disposed between the second and third portions (102, 103).

As can be recognized from the exemplary embodiments shown in Figures 1 to 3 (and more easily viewed in Figures 2 and 3) the appropriate transverse ends (adjacent to the disk seal) of the stem portions and/or the disk seal may be desirably provided with mechanical anchorage or lock-and-key elements, e.g. in the form of flanges (122) and/or corresponding depressions (123) on the respective transverse ends of the stem portions and in the disk seal, respectively. These anchorage and/or lock-and-key elements may allow for mechanical fastening and/or provide a greater surface area onto which the seal material may be bonded to the neighboring stem portions. These features are suitably configured to confer additional strength and/or anchorage and/or rigidity to the junctions between the respective elements.

Figure 4 illustrates yet another exemplary valve stem embodiment, similar to the embodiment shown in Figure 3, except that anchorage or lock-and-key elements are provided in form of barbed hooks or keys (122) and/or corresponding formed keyholes (123) on the appropriate transverse ends of the stem portions and in the disk seal, respectively. Such elements provide a greater surface area onto which the seal material may be mechanically fastened and/or bonded and also confer additional strength and rigidity to the junctions between the elements. For ease in mechanical fastening of such interlocking elements, the central portion of the disk seal may include one or more thin membraneous sections. Also as can be appreciated from Figures 3 and 4, the second (central) stem portion (102) is suitably symmetrical for ease in automated assembly of such valve stems.

As can be understood from the previous discussion, valve stems in accordance with the present invention are particular advantageous for use in shuttle-type metered dose dispensing valve. Thus one preferred metered dose dispensing valve is such a valve suitable for dispensing metered volumes of a pressurized aerosol formulation comprising a valve stem, a chamber and an outlet passage, wherein the valve stem extends into the chamber and is movable relative to the chamber between non-dispensing and dispensing positions, the valve stem having a configuration including an external surface and the chamber having an internal configuration including an internal surface such that a movable metered volume of pressurized aerosol formulation is capable of being defined therebetween and such that during the movement between its non-dispensing and dispensing positions the valve stem sequentially:
i) allows free flow of aerosol formulation into and out of the chamber;
ii) defines a closed metered volume for pressurized aerosol formulation between the external surface of the valve stem and internal surface of the chamber, and
iii) moves with the closed metered volume within the chamber without decreasing the volume of the closed metered volume until the metered volume communicates with the outlet passage thereby allowing dispensing of the metered volume of pressurized aerosol formulation, wherein the valve stem generally defining a central longitudinal axis comprises a first stem portion, a second stem portion and a disk seal, said disk seal being disposed between the first and second stem portion along the longitudinal axis of the valve stem and said disk seal extending radially outwardly from the longitudinal axis of valve stem forming a fluid-tight seal with a portion of an internal wall of said chamber. In embodiments having two seals, and when usually stored in a stem-in position, the disk seal is desirably the outer seal, i.e. the seal near the outlet passage; conversely when the stored in a stem-out position, the disk seal is desirably the inner seal. The valve stem may desirably comprise a third stem portion and a second disk seal, wherein the second disk seal is disposed between the second and third stem portions. The second disk seal like the first disk seal extends radially outwardly from the central longitudinal axis of valve stem forming a fluid-tight seal with a portion of an internal wall of said chamber.

It is to be understood that although the valve stems in accordance with the invention may be particularly advantageous for use with shuttle-type valves, other metered dose dispensing valves having a valve stem comprising at least one sealing element arranged onto the valve stem, e.g. for forming a fluid-tight annular seal with a portion of an internal wall of the valve, may also desirably include a valve stem in accordance with the present invention.

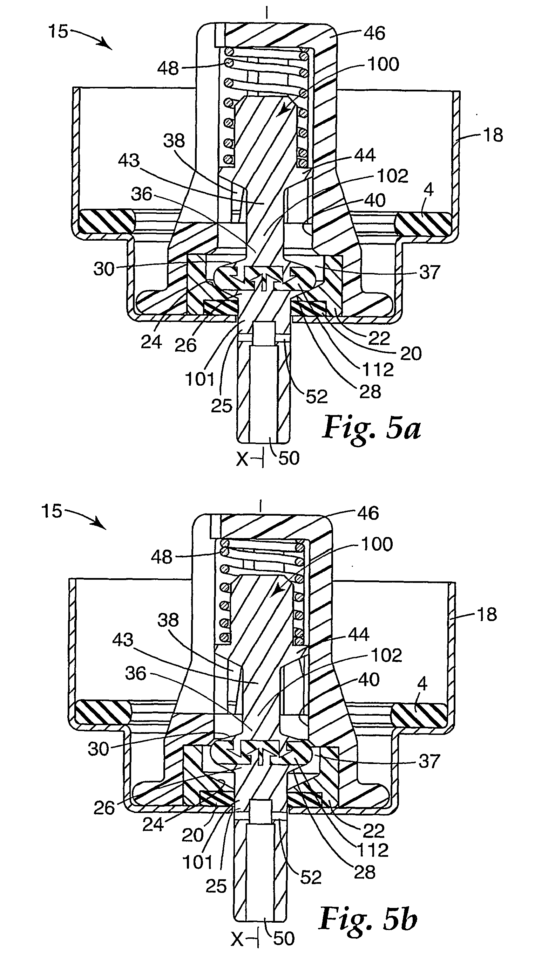

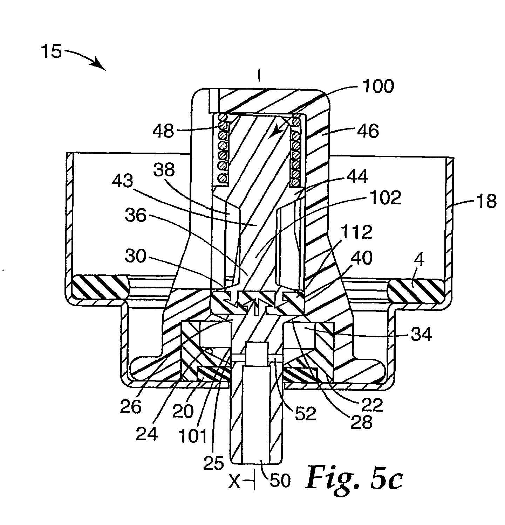

Figure 5 illustrates an additional exemplary embodiment of a metered dose dispensing valve having a transient metering chamber (a valve of the type disclosed in WO 04/022143) and including a valve stem in accordance with the invention.

Referring to Figure 5a, showing the exemplary metering valve embodiment in the rest position, the metering valve (15) typically includes a housing or ferrule (18) that serves to house the various components of the valve and suitably the top portion of the housing attaches to an aerosol container (not shown). The metering valve (15) comprises a valve stem (100) defining a generally central longitudinal axis (X) and comprising a first stem portion (101) and a second stem portion (102) and a metering gasket in the form of a disk seal (112) disposed between the first and second stem portions. The first stem portion (101) comprises a body portion (26) and an outlet portion (25) comprising a discharge passageway (50) through which a metered dose of formulation is discharged, as will be described more fully below. The passageway typically includes one or more side holes (52). The valve stem also includes a metering surface (28) defined at least by the surface of body portion (26) of the first stem portion (101) and a portion of the outer surface of the metering gasket (112) directly adjacent to the body portion (26) of the first stem portion (101), wherein the longitudinal axis and a plane tangential to at least a portion, preferably a major portion, of the metering surface (28) define an angle from about 2° to about 90°. (The metering surface (28) of the valve stem (100) is more readily recognizable in Figures 5b and 5c.) The second stem portion (102) may desirably comprise a body portion (36), referred to hereafter as second body portion, and the valve stem (100) may include a sealing surface (30) defined by at least the outer surface of the second body portion (36) and a portion of the outer surface of the metering gasket (112) directly adjacent to the second body portion (102), wherein the longitudinal axis and a plane tangential to at least a portion, preferably a major portion, of the sealing surface (30) define an angle from about 30° to about 90°. Similar to the exemplary valve stem shown in Figure 4, the first and second stem portions (101, 102) and/or the metering disk seal gasket (112) may include anchorage and/or lock-and-key elements (122, 123 - for clarity these reference numbers are not shown in Figure 5).

The valve (15) also comprises a valve body (22), which is typically seating within the valve housing (18) and which in turn provides a housing for the valve stem (100). The valve body comprises an interior body wall that comprises a sealing portion (40) and an internal cavity (37) defined at least in part by the body wall and comprising a metering portion (24) configured to substantially conform to the metering surface (28) of the valve stem (100). (The metering portion (24) of the valve body is more readily recognizable in Figures 5b and 5c). As can be appreciated from Figure 5a in comparison to Figures 5b and 5d, a substantial portion of the metering surface (28) of the valve stem rests in contact with the metering portion (24) of the valve body (22) when the metering valve is in its resting position.

The metering valve may include a spring cage (46) that together with the valve body (22) defines an interior chamber (38), a portion of which is occupied by a portion of the valve stem. One or more inlets (not shown) provide open and unrestricted fluid communication between the interior chamber (38) and the aerosol container (12). The metering valve may include a spring guide (44) mounted on an extension (43) on the end of the second end portion (102) (extending from the second body portion) of the valve stem (100) and a spring (48). The spring (48) through engagement with the spring guide biases the valve stem (100) toward the resting position. It will be appreciated by those skilled in the art that any suitable means for biasing the valve stem into the resting position may be used.

The valve (15) also comprises a diaphragm seal (20) having walls that define an aperture in slidable, sealing engagement with the outlet portion of the valve stem. The diaphragm (20) isolates the formulation in the aerosol container (12) from the exterior of the metering valve.

As can be appreciated from Figures 5 a to c, the metering gasket (112) which extends radially outwardly from the longitudinal axis of valve stem is configured to be able to form a transient, substantially fluid-tight seal between the valve stem (100) and the sealing portion (40) of the body wall and thus terminate the flow of formulation from the aerosol container (12) into the metering chamber (34) that is formed between the metering surface (28) of the valve stem (100) and the metering surface (24) of the valve body (22) during actuation of the valve stem (100). This is best understood through reference to Figures 5b and c showing the operation of the metering valve during the filling stage and in the discharge stage, respectively. As can be seen in Figure 5b during the filling stage of actuation, the valve stem (100) has been displaced inwardly against the compressive force of the spring (48). As the valve stem (100) is displaced inwardly, the proximal end of the outlet portion (25) of the first stem portion (101) of the valve stem (100) enters the valve housing (18). As a result, a metering chamber (34) is formed between the metering portion (24) of the valve body (22) and the metering surface (28) of the valve stem (100).

The volume of the metering chamber (34) increases as the valve stem is displaced until it reaches its filled-volume at the end of the filling stage. At the end of the filling stage, the flow of formulation into the metering chamber (34) is cut off as the metering gasket (112) contacts the sealing surface (40) of the valve body (22). Referring to Figure 5c the metering gasket forms a fluid-tight, preferably a sliding annular, seal with the sealing surface. As the valve stem (100) is further displaced inwardly and fully actuated, as can be seen in Figure 5c, one or more side holes (52) of the discharge passageway (50) pass through the diaphragm (20) and come into fluid communication with the metering chamber (34), thus allowing the aerosol formulation within the metering chamber to be released via said holes and passageway thereby delivering a metered dose of formulation e.g. to the patient.

Advantageously through the application of a disk seal for the metering gasket in such a metering valve, any excessive compression of the metering gasket upon contact and sealing along the sealing portion of the valve body can be released by a slight relative axial movement between the two stem portions of the valve stem, allowing for a desirably smoother operation.

As mentioned above, the disk seal is typically elastomeric and may be suitably made of a material comprising a thermoplastic elastomer or a thermoset elastomer, preferably a thermoset elastomer.

Various classes of suitable thermoplastic elastomers include polyester rubbers, polyurethane rubbers, ethylene vinyl acetate rubber, styrene butadiene rubber, copolyester thermoplastic elastomers, copolyester ether thermoplastic elastomers, olefinic thermoplastic elastomers, polyester amide thermoplastic elastomers, polyether amide thermoplastic elastomers, copolyamide thermoplastic elastomers and mixtures thereof. Examples of olefinic thermoplastic elastomers are described in WO 92/11190 and include block copolymers of ethylene with monomers selected from but-1-ene, hex-1-ene and oct-1-ene. Other examples of suitable olefinic thermoplastic elastomers are described in WO 99/20664 and in US 5703187 (Dow). Styrene-ethylene-butadiene-styrene copolymers and blends, such as those described in WO 93/22221 and WO 95/03984, as well as styrene-ethylene-propylene-styrene copolymers are suitable thermoplastic elastomers. An example of a polyether amide thermoplastic elastomer is PEBAX^{(™)} (Atofina), which is a polyether-block-copolyamide. Compositions comprising a mixture of inter-dispersed relative hard and relative soft domains may also be employed as suitable thermoplastic elastomers. Examples of such mixture compositions include SANTOPRENE^{(™)} (Advanced Elastomer Systems) which has thermoset EPDM dispersed in a polyolefin matrix or ESTANE ^{(™)} (Noveon) which is a polymer of segmented polyester urethanes with a mixture of crystalline and rubbery nanophases. Other mixtures include olefinic thermoplastic/rubber blends and polyvinyl chloride/rubber blends. Other possibilities include single-phase melt-processable rubbers and ionomers.

Preferred thermoset elastomers include thermoset ethylene-propylene-diene terpolymer (EPDM), acrylonitrile-butadiene copolymer (Nitrile rubber), isobutylene-isoprene copolymer (Butyl rubber), halogenated isobutylene-isoprene copolymer (in particular Chlorobutyl rubber and Bromobutyl rubber), polychloroprene (Neoprene), and mixtures thereof, with EPDM, nitrile rubber and butyl rubber being more preferred, EPDM and nitrile rubber even more preferred and EPDM most preferred. Thermoset elastomers are particularly suited for use with metal shaft components.

The stem portions are typically made of a material different to that used for the disk seal. Desirably the material used for the stem portions are relatively rigid in comparison to the material of the disk seal. Stem portions may suitably be made of a metal or polymeric material (more particular a non-elastomeric polymeric material). The metal may be stainless steel or aluminum. Suitable polymeric materials include polyester, such as polybutylene terephthalate, acetal, nylon, or a polymer selected from the group consisting of polyaryletherketones (PAEKs), thermotropic liquid crystalline polymers (LCPs), polymethylpentene (PMP) and polyphenylene sulfide (PPS) and mixtures thereof is also suitable.

Suitable PAEK polymers include polyetherketone, polyetheretherketone, polyetheretherketoneketone, polyetherketoneetherketoneketone and polyetherketoneketone; polyetheretherketone is preferred.

Suitable LCPs include main-chain or side-chain LCPs, more particular comprising rigid-rod-like macromolecules. Suitable polymer classes of LCPs include e.g. polyamides, polyesters and polycarbonates as well as polypeptides, polyoxamides, polyhydrazide, polyazomethine, polyisocyanide, polyisocyanate, polyorganophosphazine, metal-polyine and cellulose derivate, such as ethylcellulose and hydroxypropylcellulose. Preferred LCPs are copolyesters, copolyamides and polyester-amides, while LCPs comprising linear ester or ester/amide bonds are more preferred.

For use in valve stems in valves for delivery of medicament, the PAEK-, LCP-, PMP- and PPS-polymer is desirably non-toxic and/or recognized for use in medicinal products. Suitable grades for application in valve stems for metering dose valves for the delivery of medicament include for example non-filled polyetheretherketones PEEK^{™} 381G and 450G (available through Victrex, Lancashire, UK); non-filled and mineral-filled polyester-based LCPs VECTRA^{™} A950 and A530, respectively (available through Ticona, Kelsterbach, Germany); non-filled PMP TPX^{™} RT18 (available through Mitsui Chemicals, Düsseldorf, Germany) ; and glassfiber-filled PPS, FORTRON^{™} 9140L4 and 9140L6 (also available through Ticona).

PAEK, LCP and PMP polymers are preferred, while PAEK and LCP polymers are more preferred and PAEK polymers are most preferred.

Combinations of sealing disk made of materials comprising thermoset EPDM, nitrile rubber, butyl rubber, chlorobutyl rubber, bromobutyl rubber and/or neoprene, in particular EPDM, with axial shaft elements made of materials comprising a PAEK, LCP, PPS and/or PMP polymer, forged aluminium or forged stainless steel provide valve stems having particularly advantageous properties in regard to mechanical and/or chemical stress resistance in dispensing valves (e.g. metered dose dispensing valves) for delivery of medicinal aerosol formulations. It is to be understood that each of the possible disk seal/stem portion material combinations is individually disclosed here. Valve stems comprising axial shaft elements made of materials comprising PAEK, more particularly polyetheretherketone, and co-molded sealing disk(s) made of materials comprising thermoset EPDM show superior structural and/or chemical properties towards medicinal aerosol formulations, in particular medicinal aerosol formulations comprising liquefied propellant HFA 134a and/or HFA 227, more particularly such formulations comprising additionally ethanol.

Metered dose dispensing valves comprising a valve stem in accordance with the invention as well as metered dose dispensers comprising a container equipped with such a metered dose valve are particularly advantageous for use in dispensing medicament, in particular medicinal aerosol formulation, due to the desirable properties of the valve stems. The use of valve stems in accordance with the invention in conjunction with medicinal aerosol formulations comprising a medicament and a propellant selected from 1,1,1,2-tetrafluoroethane, 1,1,1,2,3,3,3-heptafluoropropane and a mixture thereof, more particular further comprising ethanol, is particularly advantageous. The use of disk seals with HFA-134a and/or HFA 227-based medicinal aerosol formulation comprising ethanol is particular advantageous in regard to minimizing or overcoming leakage issues as well as other problems associated with such ethanol containing formulations.

## Claims

1. A valve stem (100) for use with a metered dose dispensing valve (15), said valve stem generally defining a central longitudinal axis and comprising a first stem portion (101) and a second stem portion (102), **characterized in that** the valve stem further comprises a disk seal (112), said disk seal being disposed between the first and second stem portion along the longitudinal axis of the valve stem and said disk seal extending radially outwardly from the longitudinal axis of valve stem so as to be capable of forming a fluid-tight seal with a portion of an internal wall of said valve.

2. A valve stem (100) according to claim 1, wherein the disk seal (112) is affixed to at least one of the stem portions (101, 102).

3. A valve stem (100) according to claim 2, wherein the disk seal (112) is affixed to the first and second stem portions (101,102).

4. A valve stem (100) according to claim 2 or claim 3, wherein the disk seal (112) is mechanically fixed or/and bonded to one or both of the stem portions (101, 102).

5. A valve stem (100) according to claim 4, wherein the disk seal (112) is bonded through molding, welding, adhesive bonding or solvent bonding.

6. A valve stem (100) according to any preceding claim, wherein the disk seal (112) fixedly adjoins said first and second stem portions (101, 102).

7. A valve stem (100) according to claim 6, wherein said first and second stem portions (101, 102) are not directly affixed or connected to each other,

8. A valve stem (100), according to any preceding claim, wherein the disk seal (112) is elastomeric.

9. A metered dose dispensing valve (15) comprising a valve stem (100) according to any one of claims 1 to 8.

10. A metered dose dispenser comprising a container equipped with a metered dose dispensing valve (15) according to claim 9.

11. A metered dose dispenser according to claim 10, wherein the container contains a medicinal aerosol formulation.

12. A metered dose dispenser according to claim 11, wherein the medicinal aerosol formulation comprises a medicament and a propellant selected from 1,1,1,2-tetrafluoroethane, 1,1,1,2,3,3,3-heptafluoropropane and mixtures thereof.

13. A metered dose dispenser according to claim 12, wherein the medicinal aerosol formulation further comprises ethanol.

## Patentansprüche

1. Ventilschaft (100) zur Verwendung mit einem Dosierventil (15), wobei der Ventilschaft allgemein eine mittlere Längsachse definiert und einen ersten Schaftabschnitt (101) und einen zweiten Schaftabschnitt (102)umfasst, **dadurch gekennzeichnet, dass** der Ventilschaft des Weiteren eine Scheibendichtung (112)umfasst, wobei die Scheibendichtung zwischen dem ersten und dem zweiten Schaftabschnitt entlang der Längsachse des Ventilschafts angeordnet ist und wobei sich die Scheibendichtung dergestalt von der Längsachse des Ventilschafts radial nach außen erstreckt, dass sie in der Lage ist, mit einem Abschnitt einer Innenwand des Ventils eine Fluidabdichtung zu bilden.

2. Ventilschaft (100) nach Anspruch 1, wobei die Scheibendichtung (112) an mindestens einem der Schaftabschnitte (101, 102) befestigt ist.

3. Ventilschaft (100) nach Anspruch 2, wobei die Scheibendichtung (112) an dem ersten und dem zweiten Schaftabschnitt (101, 102) befestigt ist.

4. Ventilschaft (100) nach Anspruch 2 oder Anspruch 3, wobei die Scheibendichtung (112) an einem oder an beiden der Schaftabschnitte (101, 102) mechanisch fixiert und/oder gebondet ist.

5. Ventilschaft (100) nach Anspruch 4, wobei die Scheibendichtung (112) durch Anformen, Schweißen, Klebstoffbondung oder Lösemittelbondung gebondet ist.

6. Ventilschaft (100) nach einem der vorangehenden Ansprüche, wobei die Scheibendichtung (112) in fixierter Form an den ersten und den zweiten Schaftabschnitt (101, 102) anstößt.

7. Ventilschaft (100) nach Anspruch 6, wobei der erste und der zweite Schaftabschnitt (101, 102) nicht direkt aneinander befestigt oder miteinander verbunden sind.

8. Ventilschaft (100) nach einem der vorangehenden Ansprüche, wobei die Scheibendichtung (112) elastomer ist.

9. Dosierventil (15), das einen Ventilschaft (100) nach einem der Ansprüche 1 bis 8 umfasst.

10. Dosierer, der einen Behälter umfasst, der mit einem Dosierventil (15) nach Anspruch 9 ausgestattet ist.

11. Dosierer nach Anspruch 10, wobei der Behälter eine medizinische Aerosolformulierung enthält.

12. Dosierer nach Anspruch 11, wobei die medizinische Aerosolformulierung ein Medikament und ein Treibmittel umfasst, das unter 1,1,1,2-Tetrafluorethan, 1,1,1,2,3,3,3-Heptafluorpropan und Gemischen daraus ausgewählt ist.

13. Dosierer nach Anspruch 12, wobei die medizinische Aerosolformulierung ferner Ethanol umfasst.

## Revendications

1. Tige (100) de soupape destinée à être utilisée avec une valve doseuse (15), ladite tige de soupape définissant généralement un axe longitudinal de symétrie et comprenant une première partie (101) de tige et une deuxième partie (102) de tige, **caractérisée en ce que** la tige de soupape comprenne en outre un joint (112) à disque, ledit joint à disque étant disposé entre les première et deuxième parties de tige le long de l'axe longitudinal de la tige de soupape et ledit joint à disque s'étendant radialement vers l'extérieur à partir de l'axe longitudinal de la tige de soupape de façon à pouvoir former un joint étanche aux fluides avec une partie d'une paroi interne de ladite valve.

2. Tige (100) de soupape selon la revendication 1, le joint (112) à disque étant fixé à au moins une des parties (101, 102) de tige.

3. Tige (100) de soupape selon la revendication 2, le joint (112) à disque étant fixé aux première et deuxième parties (101, 102) de tige.

4. Tige (100) de soupape selon la revendication 2 ou la revendication 3, le joint (112) à disque étant fixé mécaniquement et / ou collé à l'une au moins des parties (101, 102) de tige.

5. Tige (100) de soupape selon la revendication 4, le joint (112) à disque étant collé par moulage, soudage, collage à l'adhésif ou collage au solvant.

6. Tige (100) de soupape selon l'une quelconque des revendications précédentes, le joint (112) à disque étant en contact statique avec lesdites première et deuxième parties (101, 102) de tige.

7. Tige (100) de soupape selon la revendication 6, lesdites première et deuxième parties (101, 102) de tige n'étant pas directement fixées ou reliées l'une à l'autre.

8. Tige (100) de soupape selon l'une quelconque des revendications précédentes, le joint (112) à disque étant en élastomère.

9. Valve doseuse (15) comprenant une tige (100) de soupape selon l'une quelconque des revendications 1 à 8.

10. Distributeur doseur comprenant un récipient équipé d'une valve doseuse (15) selon la revendication 9.

11. Distributeur doseur selon la revendication 10, le récipient contenant une formulation pour aérosol médicinal.

12. Distributeur doseur selon la revendication 11, la formulation pour aérosol médicinal comprenant un médicament et un agent propulseur choisi parmi le 1,1,1,2-tétrafluoroéthane, le 1,1,1,2,3,3,3-heptafluoropropane et les mélanges de ceux-ci.

13. Distributeur doseur selon la revendication 12, la formulation pour aérosol médicinal comprenant en outre de l'éthanol.
